# EUROPÄISCHE PATENTSCHRIFT

(11) **EP 2 766 211 B1**
(45) Veröffentlichungstag und Bekanntmachung des Hinweises auf die Patenterteilung: **18.09.2019**
(21) Anmeldenummer: 12783504.9
(22) Anmeldetag: 09.10.2012
(51) Int. Cl.: B60K 37/06, G06F 3/0482

(54) **VERFAHREN ZUM BEREITSTELLEN EINER BEDIENVORRICHTUNG, INSBESONDERE IN EINEM FAHRZEUG, UND BEDIENVORRICHTUNG FÜR EIN FAHRZEUG**
METHOD FOR MAKING AVAILABLE AN OPERATOR CONTROL, IN PARTICULAR IN A VEHICLE, AND OPERATOR CONTROL FOR A VEHICLE
PROCÉDÉ DE MISE À DISPOSITION D'UN DISPOSITIF DE COMMANDE D'UTILISATEUR, EN PARTICULIER DANS UN VÉHICULE, ET DISPOSITIF DE COMMANDE D'UTILISATEUR POUR UN VÉHICULE

(30) Priorität: 15.10.2011 DE 102011116120
(43) Veröffentlichungstag der Anmeldung: 20.08.2014
(73) Patentinhaber: Volkswagen Aktiengesellschaft, 38440 Wolfsburg (DE)
(72) Erfinder: KUHN, Mathias, 14129 Berlin (DE); JUN, Mi-Ran, 12059 Berlin (DE); LOU, Jian, 10707 Berlin (DE); BUDZYNSKI, Tobias, 13187 Berlin (DE)
(86) Internationale Anmeldenummer: PCT/EP2012/004232
(87) Internationale Veröffentlichungsnummer: WO 2013/053466

(56) Entgegenhaltungen:
- DE-A1-102010 011 480
- DE-A1-102010 012 240

## Beschreibung

Die vorliegende Erfindung betrifft ein Verfahren zum Bereitstellen einer Bedienvorrichtung in einem Fahrzeug. Bei dem Verfahren werden von einer Steuervorrichtung Graphikdaten erzeugt, die eine Anzeigefläche so ansteuern, dass mehrere graphische Objekte darstellbar sind. Ferner wird die Position eines Betätigungsobjekts vor oder auf der Anzeigefläche relativ zu einer auf der Anzeigefläche dargestellten Schaltfläche erfasst und in Abhängigkeit von der erfassten Position ein Steuersignal für eine Betätigung der Schaltfläche erzeugt. Des Weiteren betrifft die Erfindung eine Bedienvorrichtung für ein Fahrzeug. Die Bedienvorrichtung umfasst eine Anzeigevorrichtung mit einer Anzeigefläche und eine Steuervorrichtung, die mit der Anzeigevorrichtung gekoppelt ist. Mittels der Steuervorrichtung sind Graphikdaten zum Anzeigen graphischer Objekte erzeugbar. Die Bedienvorrichtung weist des Weiteren eine Annäherungserfassungseinrichtung zum Erfassen der Position eines Betätigungsobjektes vor oder auf der Anzeigefläche auf.

Mit der Zunahme elektronischer Einrichtungen im Fahrzeug wurde es erforderlich, eine größere Informationsmenge im Fahrzeug darzustellen. Moderne Fahrzeuge umfassen beispielsweise neben einer Multifunktionsanzeige eine Vielzahl von Fahrerassistenzsystemen, deren Informationen im Fahrzeug angezeigt werden müssen. Des Weiteren umfassen Fahrzeuge häufig ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Damit der Nutzer die auf einer Anzeigefläche dargestellte Information so schnell und intuitiv wie möglich erfassen kann und um ihm außerdem eine schnelle, intuitive und einfache Bedienung von Einrichtungen zu ermöglichen, deren Informationen dargestellt werden, ist aus der WO 2009/024474 A1 ein Verfahren zum Anzeigen von Informationen bekannt, bei dem ein flächiges Objekt auf einem Display graphisch dargestellt wird, wobei das graphische Objekt ein Anzeigefeld und ein Bedienfeld umfasst. Das Anzeigefeld wird auf einer Seite des flächigen graphischen Objekts und das Bedienfeld auf der anderen Seite des flächigen graphischen Objekts dargerstellt. Auf eine Eingabe mittels einer Eingabeeinrichtung werden die Graphikdaten zur Anzeige auf dem Display so verändert, dass sich das graphische Objekt bei einer perspektivischen Darstellung auf dem Display von einer Seite zu der anderen Seite dreht.

Des Weiteren ist aus der WO 2009/024400 A1 ein Verfahren zum Anzeigen von Informationen bekant, bei dem graphische Objekte, welche auf einer Anzeigefläche angezeigt werden, auf einem virtuellen, perspektivisch dargestellten Ring angeordnet dargestellt werden, wobei auf eine Eingabe mittels einer Eingabeeinrichtung eine Recheneinheit einer Benutzerschnittstelleneinrichtung die Graphikdaten für die Anzeige auf der Anzeigefläche so verändert, dass sich die Objekte auf dem virtuellen Ring karussellartig drehen. Dabei wird insbesondere mittels der Eingabeeinrichtung eine Linie auf der Anzeigefläche eingegeben und der Winkel, um den die Objekte gedreht werden, steht in einer direkten Beziehung zu der eingegebenen Länge auf der Anzeigefläche.

Für die Anzeige von Information in einem Fahrzeug ergeben sich sehr spezielle Anforderungen. Die Informationsaufnahme erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Wird die Bedienung der Fahrzeugeinrichtungen von einer Anzeige unterstützt oder geführt, sollte die Anzeige so erfolgen, dass der Fahrer für die Bedienung nur sehr kurz die Anzeige betrachten muss, um die Bedienung durchzuführen.

Die DE 10 2010011 480 zeigt den Oberbegriff der Ansprüche 1 und 9.

Der vorliegenden Erfindung liegt die Aufgabe zugrunde, ein Verfahren und eine Bedienvorrichtung der eingangs genannten Art bereitzustellen, bei welchen die dargestellten Informationen so schnell und intuitiv wie möglich vom Betrachter erfassbar sind und welche eine schnelle, intuitive und einfache Bedienung von Fahrzeugeinrichtungen ermöglichen, deren Informationen dargestellt werden.

Erfindungsgemäß wird diese Aufgabe durch ein Verfahren mit den Merkmalen des Anspruchs 1 und eine Bedienvorrichtung mit den Merkmalen des Anspruchs 9 gelöst. Vorteilhafte Ausgestaltungen und Weiterbildungen ergeben sich aus den abhängigen Ansprüchen.

Bei dem erfindungsgemäßen Verfahren werden von einer Steuervorrichtung Graphikdaten erzeugt, die eine Anzeigefläche so ansteuern, dass mehrere graphische Objekte in zumindest zwei Anzeigemodi darstellbar sind, wobei in dem ersten Anzeigemodus die graphischen Objekte in einer einzigen Reihe nebeneinander angeordnet angezeigt werden und in dem zweiten Anzeigemodus die graphischen Objekte in einer Matrix angeordnet angezeigt werden. Ferner wird bei dem erfindungsgemäßen Verfahren zumindest eine Schaltfläche für einen Wechsel zwischen den Anzeigemodi angezeigt. Die Position eines Betätigungsobjekts vor oder auf der Anzeigefläche relativ zu der Schaltfläche wird erfasst und in Abhängigkeit von der erfassten Position wird ein Steuersignal für eine Betätigung der Schaltfläche erzeugt. Durch das Steuersignal wird ein Wechsel von dem aktuell angezeigten Anzeigemodus in den anderen Anzeigemodus durchgeführt, wobei während des Übergangs von dem aktuell angezeigten Anzeigemodus zu dem andern Anzeigemodus eine animierte Bildfolge wiedergegeben wird, bei der die graphischen Objekte von den Positionen bei dem aktuell angezeigten Anzeigemodus zu den Positionen bei dem anderen Anzeigemodus bewegt werden.

Der Nutzer hat bei dem erfindungsgemäßen Verfahren somit die Möglichkeit, sich die graphischen Objekte in unterschiedlicher Weise anzeigen zu lassen. Je nach Bediensituation kann der eine Anzeigemodus oder der andere Anzeigemodus geeignet für einen folgenden Bedienvorgang sein. Der Nutzer kann sehr einfach und intuitiv über die angezeigte Schaltfläche zwischen den Anzeigemodi wechseln. Bei dem Übergang zwischen den Anzeigemodi wird eine animierte Bildfolge wiedergegeben, welche es dem Nutzer erleichtert, sich bei dem Übergang von dem einen Anzeigemodus in den anderen Anzeigemodus zu orientieren. Die graphischen Objekte wandern nämlich sichtbar von der Position des einen Anzeigemodus in die Position des anderen Anzeigemodus.

Im ersten Anzeigemodus werden die graphischen Objekte insbesondere in einer geraden Reihe auf einer Linie dargestellt. Im zweiten Anzeigemodus wird hingegen eine Matrix mit den graphischen Objekten dargestellt, die mehrere Zeilen und mehrere Spalten umfasst.

Unter einer *Schaltfläche* wird im Sinne der Erfindung ein Steuerelement einer graphischen Benutzerschnittstelle verstanden. Eine Schaltfläche unterscheidet sich von Elementen und Flächen zur reinen Informationsanzeige, so genannten Anzeigeelementen bzw. Anzeigenflächen, darin, dass sie auswählbar sind. Bei einer Auswahl einer Schaltfläche wird eine ihr zugeordnete Funktion ausgeführt. Die Funktion kann nur zu einer Veränderung der Informationsanzeige führen. Ferner können über die Schaltflächen Einrichtungen gesteuert werden, deren Bedienung von der Informationsanzeige unterstützt wird. Die Schaltflächen können somit herkömmliche mechanische Schalter ersetzen. Die Schaltflächen können beliebig für eine frei programmierbaren Anzeigefläche erzeugt und von dieser angezeigt werden. Des Weiteren kann vorgesehen sein, dass eine Schaltfläche markiert werden kann. In diesem Fall wird die zugeordnete Funktion noch nicht ausgeführt. Die markierte Schaltfläche wird jedoch gegenüber anderen Schaltflächen hervorgehoben dargestellt. Erst bei einer Auswahl der Schaltfläche wird die ihr zugeordnete Funktion ausgeführt.

Bei dem Betätigungsobjekt, welches bei dem erfindungsgemäßen Verfahren verwendet wird, kann es sich beispielsweise um die Fingerspitze eines Nutzers oder einen Betätigungsstift handeln. Bei dem erfindungsgemäßen Verfahren wird insbesondere eine Anzeigefläche eingesetzt, auf welcher eine berührungsempfindliche Oberfläche ausgebildet ist. Es wird somit ein sogenannter Touchscreen verwendet.

Gemäß einer Weiterbildung des erfindungsgemäßen Verfahrens umfassen die graphischen Objekte Informationssymbole. Zu jedem graphischen Objekt ist des Weiteren ein graphisches Zusatzobjekt definiert, dessen Graphikdaten von der Steuervorrichtung erzeugbar sind. Bei dieser Weiterbildung des erfindungsgemäßen Verfahrens wird im ersten Anzeigemodus das graphische Zusatzobjekt nur für ein markiertes Objekt angezeigt. Im zweiten Anzeigemodus werden hingegen die graphischen Zusatzobjekte aller angezeigten Objekte angezeigt. Durch diese Weiterbildung wird erreicht, dass im ersten Anzeigemodus eine besonders übersichtliche Darstellung erfolgt, bei welcher der Betrachter das aktuell markierte graphische Objekt besonders schnell erfassen kann. Über die Informationssymbole kann er die Funktion der graphischen Objekte dennoch erfassen. In dem zweiten Anzeigemodus werden dem Betrachter hingegen umfassendere Informationen zu allen graphischen Objekten durch die graphischen Zusatzobjekte angezeigt, so dass der Nutzer schneller ein gewünschtes graphisches Objekt auswählen kann.

Bei einer Markierung eines graphischen Objekts wird dieses Objekt gegenüber den anderen Objekten hervorgehoben dargestellt. Bei einer Auswahl des graphischen Objekts wird eine diesem graphischen Objekt zugeordnete Anwendung oder ein diesem graphischen Objekt zugeordneter Informationsinhalt angezeigt.

Gemäß einer weiteren Ausgestaltung des erfindungsgemäßen Verfahrens wird eine Annäherung des Betätigungsobjekts in einem Detektionsbereich vor der Anzeigefläche erfasst. Wenn ein Betätigungsobjekt im Detektionsbereich erfasst wurde, wechselt die Steuervorrichtung von einem Anzeigezustand in einen Bedienzustand.

In dem Anzeigezustand werden die Informationen so dargestellt, dass sie vom Nutzer besonders einfach erfasst werden können. Die Darstellung im ersten oder zweiten Anzeigemodus erfolgt zunächst im Anzeigezustand. Im Bedienzustand wird die Anzeige dann so verändert, dass der Betrachter zum einen erkennen kann, welche Bereiche der Anzeigefläche als Schaltflächen für die Bedienung ausgebildet sind. Zum anderen kann die Art der Darstellung an die Bedienung einer berührungsempfindlichen Oberfläche auf der Anzeigefläche optimiert werden, indem sich beispielsweise Anzeigeelemente in Schaltflächen umwandeln und dabei vergrößert dargestellt werden. Die Darstellungsart des ersten und zweiten Anzeigemodus erfolgt sowohl im Anzeigezustand als auch im Bedienzustand, wobei sich die Darstellung der Anzeigemodi im Anzeige- oder Bedienzustand wie erläutert unterscheiden kann.

Will der Nutzer einen Bedienschritt ausführen, d.h. zum Beispiel die Schaltfläche für den Wechsel zwischen den Anzeigemodi betätigen, braucht er sich nur mit dem Betätigungsobjekt, d.h. zum Beispiel seiner Fingerspitze, der Anzeigefläche annähern. Dies ist eine für den Nutzer intuitive Vorgehensweise, so dass sie zumeist auch vom Fahrer des Fahrzeugs ausgeführt werden kann, ohne dass dieser den Blick vom Fahrgeschehen abwenden muss. Wird eine solche Annäherung an die Anzeigefläche detektiert, wechselt die Steuervorrichtung von dem Anzeigezustand in den Bedienzustand. Wenn der Nutzer nun seinen Blick erst dann kurzfristig auf die Anzeigefläche richtet, wenn sich seine Fingerspitze bereits im Detektionsbereich befindet, nimmt er die im Bedienzustand gewählte Darstellungsart wahr und kann auf diese Weise sehr schnell den gewünschten Bedienschritt ausführen.

Im ersten Anzeigemodus ist insbesondere ein graphisches Objekt einer bestimmten Position automatisch markiert. Im Bedienzustand wird die Markierung dann durch eine hervorgehobene Darstellung des markierten graphischen Objekts visualisiert. Beispielsweise kann das markierte graphische Objekt im Bedienzustand perspektivisch hervortreten, so dass der Nutzer sofort erkennen kann, welches graphische Objekt aktuell im markierten Zustand ist. Des Weiteren werden gemäß einer Ausgestaltung des erfindungsgemäßen Verfahrens Schaltflächen im Bedienzustand umrandet oder mit einer Farbe oder einer Graustufe hinterlegt dargestellt. Die übrige Darstellung des graphischen Objekts verändert sich beim Übergang vom Anzeigezustand in den Bedienzustand nicht. Hierdurch wird erreicht, dass der Nutzer sich schnell und intuitiv bei dem Übergang vom Anzeigezustand in den Bedienzustand orientieren kann, gleichzeitig jedoch sehr einfach und schnell erfassen kann, bei welchen graphischen Objekten es sich um betätigbare Schaltflächen handelt.

Gemäß einer Ausgestaltung des erfindungsgemäßen Verfahrens wird im ersten Anzeigemodus eine Teilmenge aller graphischen Objekte angezeigt. Ferner wird ein graphisches Navigationsobjekt angezeigt, welches zum einen visualisiert, welche Teilmenge aktuell angezeigt wird, und welches zum anderen mehrere Schaltflächen zum Auswählen der Teilmenge umfasst. Anhand des Navigationsobjekts kann der Nutzer vorteilhafterweise schnell und intuitiv erkennen, welche Teilmengen der graphischen Objekte im ersten Anzeigemodus aktuell angezeigt werden. Zum anderen kann der Nutzer über dieses Navigationsobjekt sehr schnell die gewünschte Teilmenge auswählen. Er muss in diesem Fall insbesondere nicht eine Betätigung der graphischen Objekte selbst ausführen. Die Betätigung kann über das graphische Navigationsobjekt erfolgen.

Alternativ oder zusätzlich wird gemäß einer Ausgestaltung des erfindungsgemäßen Verfahrens die aktuell angezeigte Teilmenge dadurch verändert, dass eine Wischgeste des Betätigungsobjekts erfasst wird. Die Wischgeste wird beispielsweise auf einer berührungsempfindlichen Oberfläche der Anzeigefläche ausgeführt, indem beispielsweise die Position, bei welcher das Betätigungsobjekt die berührungsempfindliche Oberfläche berührt, entlang der Reihe bewegt wird, in welcher die graphischen Objekte dargestellt werden. Bei einer anderen Ausgestaltung ist es möglich, dass die Wischgeste auch in dem Detektionsbereich berührungslos vor der Anzeigefläche ausgeführt und erfasst wird.

Gemäß einer Weiterbildung des erfindungsgemäßen Verfahrens werden im zweiten Anzeigemodus alle graphischen Objekte gleichzeitig angezeigt. In diesem Anzeigemodus kann der Nutzer somit ein gewünschtes graphisches Objekt besonders schnell auswählen.

Gemäß einer Weiterbildung des erfindungsgemäßen Verfahrens wird im ersten Anzeigemodus ein graphisches Objekt dadurch ausgewählt, dass das Betätigungsobjekt eine berührungsempfindliche Oberfläche der Anzeigefläche in dem Bereich antippt, in dem das graphische Objekt angezeigt wird, und dass nach der Auswahl das ausgewählte graphische Objekt zu der bestimmten Position des markierten graphischen Objekts bewegt wird und schließlich ein dem ausgewählten graphischen Objekt zugeordneter Informationsinhalt angezeigt wird oder eine dem ausgewählten graphischen Objekt zugeordnete Anwendung ausgeführt wird.

Unter einem Antippen wird im Sinne der Erfindung eine kurze Berührung der berührungsempfindlichen Oberfläche verstanden, wobei bei dieser Berührung insbesondere keine Bewegung auf der berührungsempfindlichen Oberfläche ausgeführt wird.

Durch diese Ausgestaltung des erfindungsgemäßen Verfahrens wird dem Nutzer intuitiv visualisiert, welches graphische Objekt ausgewählt wurde. Hierdurch wird dem Nutzer die Orientierung erleichtert.

Die erfindungsgemäße Bedienvorrichtung ist dadurch gekennzeichnet, dass mittels der Steuervorrichtung mehrere graphische Objekte in zumindest zwei Anzeigemodi darstellbar sind, wobei in dem ersten Anzeigemodus die graphischen Objekte in einer einzigen Reihe nebeneinander angeordnet angezeigt werden und in dem zweiten Anzeigemodus die graphischen Objekte in einer Matrix angeordnet angezeigt werden. Ferner ist mittels der Steuervorrichtung zumindest eine Schaltfläche für einen Wechsel zwischen den Anzeigemodi anzeigbar und ein Steuersignal für eine Betätigung der Schaltfläche erzeugbar, wenn von der Annäherungserfassungseinrichtung eine bestimmte Position des Betätigungsobjekts relativ zu der Schaltfläche erfasst worden ist. Durch das Steuersignal ist ein Wechsel von dem aktuell angezeigten Anzeigemodus in den anderen Anzeigemodus durchführbar, wobei während des Übergangs von dem aktuell angezeigten Anzeigemodus in den anderen Anzeigemodus eine animierte Bildfolge wiedergegeben wird, bei der die graphischen Objekte von den Positionen bei dem aktuell angezeigten Anzeigemodus zu den Positionen bei dem anderen Anzeigemodus bewegt werden.

Die erfindungsgemäße Bedienvorrichtung ist insbesondere so ausgebildet, dass sie die vorstehend genannten Verfahrensschritte teilweise oder vollständig ausführen kann. Mittels der Bedienvorrichtung können verschiedene Einrichtungen des Fahrzeugs bedient werden. Die erfindungsgemäße Bedienvorrichtung weist dieselben vorstehend genannten Vorteile wie das erfindungsgemäße Verfahren auf.

Gemäß einer Ausgestaltung der erfindungsgemäßen Bedienvorrichtung ist auf der Anzeigefläche eine berührungsempfindliche Oberfläche ausgebildet. In diesem Fall wird die Berührung einer auf der Anzeigefläche angezeigten Schaltfläche erfasst und als Betätigung der Schaltfläche interpretiert.

Des Weiteren wird bei einer Ausgestaltung der erfindungsgemäßen Bedienvorrichtung eine Annäherung des Betätigungsobjekts an die Anzeigefläche erfasst. Die hierfür vorgesehene Annäherungserfassungseinrichtung kann beispielsweise eine Reflektionslichtschranke umfassen, die mindestens ein Leuchtmittel zum Emittieren von elektromagnetischer Detektionsstrahlung in den Detektionsbereich und ein Empfangselement zum Detektieren eines an dem Betätigungsobjekt gestreuten und/oder reflektierten Anteils der Detektionsstrahlung umfassen. Sie kann insbesondere so ausgebildet sein, das Betätigungsobjekt in dem Detektionsbereich anhand der Intensität der empfangenen Detektionsstrahlung zu erkennen. Die Annäherungserfassungseinrichtung kann ferner verschiedene Leuchtmittel für die einzelnen Detektionszonen umfassen, die jeweils elektromagnetische Detektionsstrahlung in die jeweilige Detektionszone emittieren. Ferner kann eine Modulationsvorrichtung zum Modulieren der emittierten Detektionsstrahlung vorgesehen sein, so dass sich die Detektionsstrahlung, die in die einzelnen Detektionszonen emittiert wird, jeweils hinsichtlich ihrer Modulation unterscheidet. In diesem Fall kann die Annäherungserfassungseinrichtung auch eine Analyseeinheit umfassen, die so ausgebildet ist, dass die empfangene reflektierte und/oder gestreute Detektionsstrahlung hinsichtlich ihrer Modulation analysiert werden kann, um zu ermitteln, in welcher Detektionszone die Detektionsstrahlung an einem Betätigungsobjekt gestreut oder reflektiert wurde.

Des Weiteren betrifft die Erfindung ein Fahrzeug mit der erfindungsgemäßen Bedienvorrichtung. Die Anzeigefläche ist in diesem Fall so angeordnet, dass sie gut von dem Fahrer und/oder dem Beifahrer erreicht werden kann. Beispielsweise ist die Anzeigefläche in der Mittelkonsole des Fahrzeugs angeordnet.

Die Erfindung wird nun anhand eines Ausführungsbeispiels mit Bezug zu den Zeichnungen erläutert.
- Figur 1: zeigt schematisch ein Ausführungsbeispiel der erfindungsgemäßen Bedienvorrichtung und die Verbindung dieser Bedienvorrichtung mit anderen Einrichtungen des Fahrzeugs,
- Figur 2: zeigt eine Schnittansicht der Anzeigevorrichtung des Ausführungsbeispiels der erfindungsgemäßen Bedienvorrichtung,
- die Figuren 3 bis 10: zeigen Anzeigen auf der Anzeigefläche der erfindungsgemäßen Bedienvorrichtung, die von einem Ausführungsbeispiel des erfindungsgemäßen Verfahrens erzeugt wurden, und
- Figur 11: zeigt ein Fahrzeug mit dem Ausführungsbeispiel der erfindungsgemäßen Bedienvorrichtung.

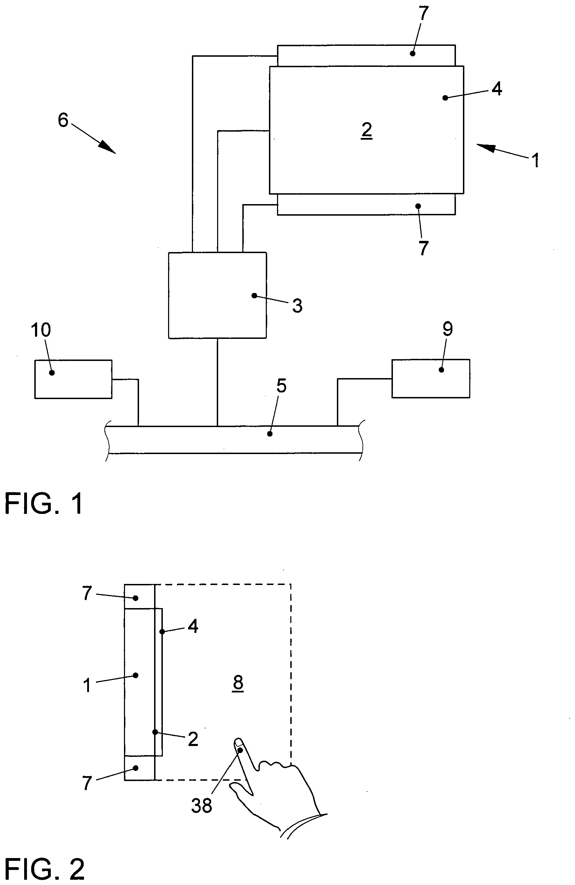

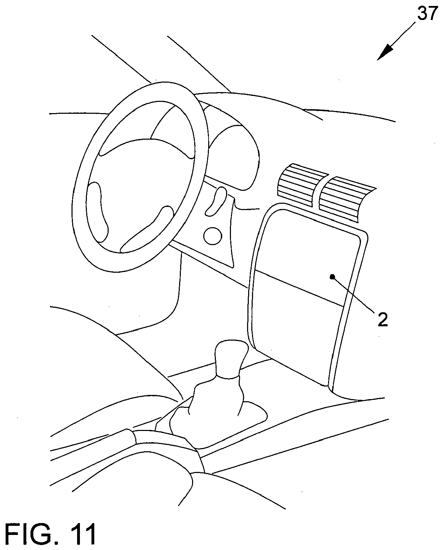

Mit Bezug zu den Figuren 1, 2 und 11 wird zunächst ein Ausführungsbeispiel der erfindungsgemäßen Bedienvorrichtung 6 und dessen Anordnung in einem Fahrzeug 37 erläutert:
Die Bedienvorrichtung 6 umfasst eine Anzeigevorrichtung 1 mit einer Anzeigefläche 2, die so im Innenraum des Fahrzeugs 37 angeordnet ist, dass sie für zumindest einen Fahrzeuginsassen, insbesondere den Fahrer, gut sichtbar ist. Die Anzeigefläche 2 kann von einem Display, insbesondere einem Flüssigkeitskristalldisplay, beliebiger Bauart bereitgestellt werden.

Die Bedienvorrichtung 6 umfasst ferner eine Steuervorrichtung 3 und eine Eingabevorrichtung 4. Die Steuervorrichtung 3 ist mit der Anzeigevorrichtung 1 verbunden, mit welcher Graphikdaten zur Informationsdarstellung auf der Anzeigefläche 2 erzeugbar sind. Die Eingabevorrichtung ist als berührungsempfindliche Oberfläche 4 auf der Anzeigefläche 2 ausgebildet. Es wird somit ein sogenannter Touchscreen bereitgestellt.

Beispielsweise kann eine Folie über der Anzeigefläche 2 angeordnet sein, mit welcher die Position einer Berührung eines Betätigungsobjekts 38 detektiert werden kann. Bei dem Betätigungsobjekt handelt es sich insbesondere um die Fingerspitze 38 eines Nutzers. Die Folie kann z. B. als resistive Touchfolie, kapazitive Touchfolie oder piezoelektrische Folie ausgebildet sein. Ferner kann die Folie so ausgebildet sein, dass ein Wärmestrom, der z. B. von der Fingerspitze 38 eines Nutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position erfasst und einem auf der Anzeigefläche 2 angezeigten graphischen Objekt zugeordnet werden. Des Weiteren kann die Länge der Berührung bei einer bestimmten Position oder innerhalb eines bestimmten Bereichs erfasst werden. Auf der Anzeigefläche 2 kann eine betätigbare Schaltfläche angezeigt werden.

Des Weiteren umfasst die Bedienvorrichtung 6 eine Annäherungserfassungseinrichtung 7. Mittels der Annäherungserfassungseinrichtung 7 kann ein Betätigungsobjekt 38 in einem Detektionsbereich 8 erfasst werden. Der Detektionsbereich 8 ist in Fig. 2 im Detail dargestellt. Der Detektionsbereich 8 ist so gebildet, dass eine Annäherung eines Betätigungsobjekts 38 an die berührungsempfindliche Oberfläche 4 auf der Anzeigefläche 2 erfasst wird.

In dem hier beschriebenen Ausführungsbeispiel bildet der Detektionsbereich 8 zumindest ein Volumen vor der Bedienoberfläche 4. Es ist insbesondere ein Quader gebildet, der mit seinen Seitenflächen in der Erstreckung, die parallel zu der berührungsempfindlichen Oberfläche 4 verläuft, die berührungsempfindliche Oberfläche 4 vollständig umschließt. In einer Richtung senkrecht zur berührungsempfindlichen Oberfläche 4 reicht der Quader von der berührungsempfindlichen Oberfläche 4 oder unmittelbar vor der berührungsempfindlichen Oberfläche 4 bis zu einem Abstand von z. B. etwa 40 cm. Der Abstand der äußeren Grenze des Detektionsbereichs 8 vor der berührungsempfindlichen Oberfläche 4 wird dabei so gewählt, dass eine Annäherung an die berührungsempfindliche Oberfläche 4 so rechtzeitig detektiert werden kann, dass die Anzeige auf der Anzeigefläche 2 früh genug verändert werden kann, um den Nutzer bei einer Eingabe zu unterstützen. Ferner sollte der Abstand des Detektionsbereichs 8 von der berührungsempfindlichen Oberfläche 4 so gewählt werden, dass das Betätigungsobjekt 38 oder ein anderes Objekt so selten wie möglich in den Detektionsbereich 8 bewegt wird, wenn keine Bedienung der berührungsempfindlichen Oberfläche 4 beabsichtigt ist.

Weitere Details zu verschiedenen Ausbildungen der Annäherungserfassungseinrichtung 7 sind beispielsweise in der WO 2011/051361 A1 beschrieben.

Die Annäherungserfassungseinrichtung 7 überträgt die aktuelle Position eines Betätigungsobjekts 38 im Detektionsbereich 8 fortwährend an die Steuervorrichtung 3. In Abhängigkeit von diesem Signal kann die Steuervorrichtung 3 die Anzeige auf der Anzeigefläche 2 verändern.

Schließlich ist die Steuervorrichtung 3 mit einem Datenbus 5 gekoppelt. Über diesen Datenbus 5 ist die Steuervorrichtung 3 mit weiteren Einrichtungen 9, 10 des Fahrzeugs 37 verbunden, zu denen Informationen auf der Anzeigefläche 2 angezeigt werden sollen und die mittels der Bedienvorrichtung 6 bedient werden sollen. Mittels Bedienvorrichtung 6 und durch das Verfahren können den Fahrzeuginsassen Informationen angezeigt werden. Ferner können die Fahrzeuginsassen mittels der Bedienvorrichtung 6 Einrichtungen 9, 10 des Fahrzeugs 37 bedienen und die Anzeige steuern.

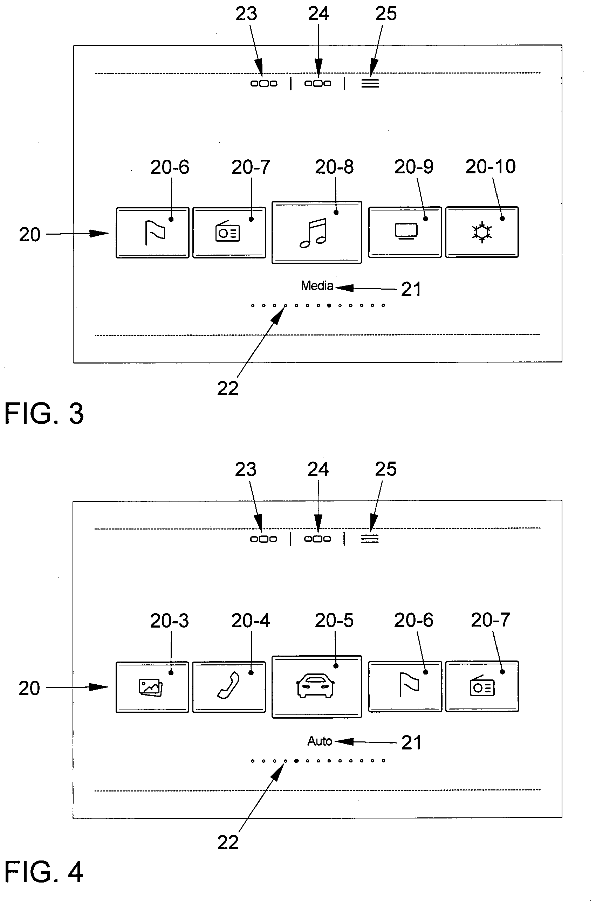

Im Folgenden wird ein Ausführungsbeispiel des erfindungsgemäßen Verfahrens, welches von der vorstehend beschriebenen Bedienvorrichtung 6 ausführbar ist, mit Bezug zu den Figuren 3 bis 10 im Detail erläutert:

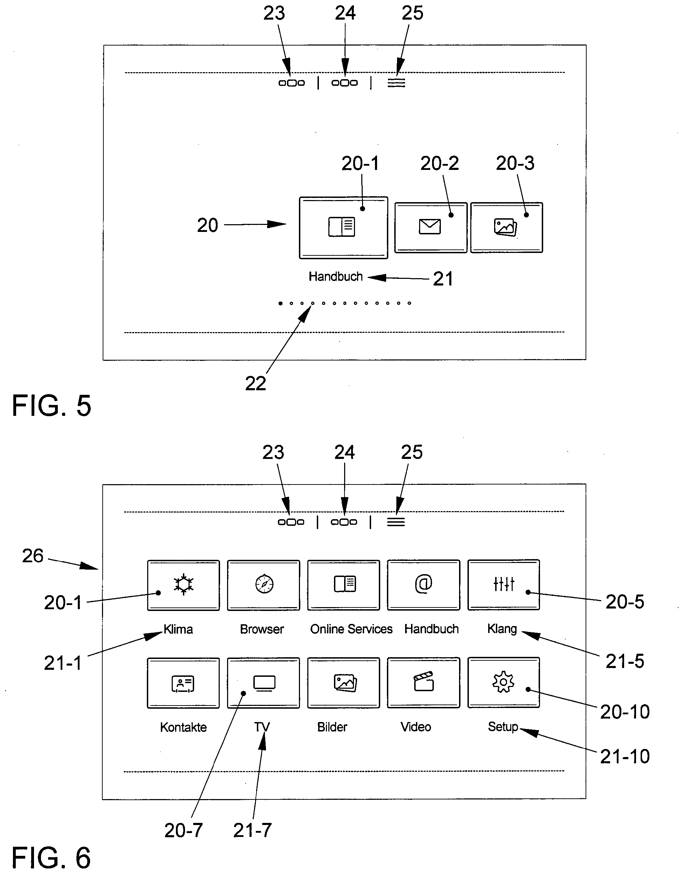

Die Figuren 3 bis 5 zeigen einen ersten Anzeigemodus für die Darstellung eines Hauptmenüs einer hierarchischen Menüstruktur. In diesem ersten Anzeigemodus wird eine einzige gerade Reihe 20 angezeigt, auf welcher eine Teilmenge mehrerer graphischer Objekte 20-1 bis 20-10 angezeigt wird. Die graphischen Objekte 20-1 bis 20-10 sind den Einträgen des Hauptmenüs zugeordnet. Sie werden in der Reihe 20 immer in derselben geordneten Reihenfolge angezeigt. Der Nutzer kann, wie es später erläutert wird, auswählen, welche Teilmenge der graphischen Objekte 20-1 bis 20-10 angezeigt wird. Wie in den Figuren 3 und 4 gezeigt, werden insgesamt fünf graphische Objekte angezeigt, wobei das mittlere graphische Objekt, d. h. das graphische Objekt 20-8 bei der Darstellung gemäß Figur 3 bzw. das graphische Objekt 20-5 bei der Darstellung gemäß Figur 4, markiert dargestellt wird. Die markierte Darstellung zeichnet sich im ersten Anzeigemodus dadurch aus, dass das graphische Objekt etwas vergrößert bzw. perspektivisch hervortretend dargestellt wird. Am Anfang bzw. am Ende der Reihe 20 werden weniger graphische Objekte dargestellt. Dies ist in Figur 5 am Anfang der Reihe 20 dargestellt. In diesem Fall werden nur drei graphische Objekte 20-1 bis 20-3 dargestellt, wobei auch in diesem Fall das graphische Objekt 20-1 in der mittleren Position markiert dargestellt wird.

Die graphischen Objekte 20-1 bis 20-10 umfassen kachelartige Rechtecke, auf denen verschiedene Symbole dargestellt sind, welche auf die Funktion des jeweiligen graphischen Objekts 20-1 bis 20-10 hinweisen.

Zu dem markierten graphischen Objekt 20-8, 20-5 bzw. 20-1 wird jeweils ein graphisches Zusatzobjekt 21 angezeigt, welches die Funktion des markierten graphischen Objekts 20-8, 20-5 bzw. 20-1 alphanumerisch benennt. Dieses graphische Zusatzobjekt 21 wird nur für das markierte graphische Objekt 20-8, 20-5 bzw. 20-1 angezeigt, für die übrigen angezeigten graphischen Objekte wird ein solches Zusatzobjekt 21 im ersten Anzeigemodus nicht angezeigt.

Um dem Nutzer zu visualisieren, welche Teilmenge von graphischen Objekten 20-1 bis 20-10 innerhalb der Gesamtmenge der graphischen Objekte 20-1 bis 20-10 aktuell angezeigt wird, wird ein graphisches Navigationsobjekt 22 unterhalb der Reihe 20 dargestellt, welches so viele Punkte umfasst, wie es graphische Objekte 20-1 bis 20-10 gibt. Einer der in einer Reihe angeordneten Punkte wird hervorgehoben, zum Beispiel heller, dargestellt. Dieser hervorgehoben dargestellte Punkt in dem Navigationsobjekt 22 entspricht dem aktuell markierten graphischen Objekt 20-8, 20-5 bzw. 20-1.

Der Nutzer kann durch einen Bedienvorgang die angezeigte Teilmenge der graphischen Objekte 20-1 bis 20-10 verändern. Hierfür nähert sich der Nutzer mit einer Fingerspitze 38 der Anzeigefläche 2 an. Wenn die Fingerspitze 38 des Nutzers in den Detektionsbereich 8 eintritt, wird dies von der Annäherungserfassungseinrichtung 7 erfasst und ein entsprechendes Steuersignal wird an die Steuervorrichtung 3 übertragen. Die Steuervorrichtung 3 wechselt die Anzeige auf der Anzeigefläche 2 daraufhin von einem Anzeigezustand in einen Bedienzustand. Daraufhin werden graphische Objekte 20-1 bis 20-10 sowie 22, welche betätigt werden können, in betätigbare Schaltflächen umgewandelt. Dies wird dem Nutzer durch eine veränderte Darstellung visualisiert. In dem hier beschriebenen Ausführungsbeispiel erhalten Schaltflächen eine Umrandung, welche sich von der Darstellung im Anzeigezustand unterscheidet. Im ersten Anzeigemodus werden die graphischen Objekte 20-1 bis 20-10 in der Reihe 20 ferner so verändert, dass das markierte graphische Objekt 20-8, 20-5 bzw. 20-1 nicht mehr hervorgehoben dargestellt wird, sondern in die Reihe 20 gleichberechtigt mit den übrigen angezeigten graphischen Objekten zurücktritt.

Der Nutzer kann mit seiner Fingerspitze 38 nun die berührungsempfindliche Oberfläche 4 auf der Anzeigefläche 2 bei einem der Punkte des Navigationsobjekts 22 kurz antippen. Die Steuervorrichtung 3 erzeugt daraufhin eine animierte Bildfolge, bei welcher die graphischen Objekte 20-1 bis 20-10 in der Reihe 20 in Richtung des graphischen Objekts bewegt werden, welches dem vom Nutzer angetippten Punkt des Navigationsobjekts 22 zugeordnet ist. Dabei wird zunächst eine beschleunigte Bewegung und am Ende eine abgebremste Bewegung durchgeführt, welche mit dem graphischen Objekt in der Mitte endet, welches durch den Bedienvorgang markiert wurde. Nachdem der Nutzer mit seiner Fingerspitze den Detektionsraum 8 wieder verlassen hat und dies von der Annäherungserfassungseinrichtung 7 erfasst wurde, wechselt die Steuervorrichtung 3 wieder von dem Bedienzustand in den Anzeigezustand. In diesem Fall wird das nun markierte graphische Objekt wie vorstehend erläutert hervorgehoben dargestellt. Ferner wird das graphische Zusatzobjekt 21 zu dem neu markierten graphischen Objekt angezeigt.

Statt einen Punkt des Navigationsobjekts 22 anzutippen, kann der Nutzer auch seine Fingerspitze 38 auf dem graphischen Navigationsobjekt 22 bewegen. Die Anzeige der Teilmenge der graphischen Objekte 20-1 bis 20-10 wird daraufhin jeweils so verändert, dass das graphische Objekt in der Mitte angezeigt wird, welches dem Punkt des Navigationsobjekts 22 zugeordnet ist, bei dem der Nutzer momentan die berührungsempfindliche Oberfläche 4 auf der Anzeigefläche 2 berührt. Löst der Nutzer seine Fingerspitze von der berührungsempfindlichen Oberfläche 4, verbleibt die zuletzt angezeigte Teilmenge der graphischen Objekte 20-1 bis 20-10 bei der zuletzt angezeigten Teilmenge und die Anzeige wechselt wieder vom Bedienzustand in den Anzeigezustand, wenn der Nutzer den Detektionsbereich 8 verlassen hat.

Schließlich kann der Nutzer in dem Bereich der berührungsempfindlichen Oberfläche 4, in dem die Reihe 20 auf der Anzeigefläche 2 angezeigt wird, eine Wischgeste ausführen. Der Nutzer bewegt in diesem Fall seine Fingerspitze 38 wischend über die berührungsempfindliche Oberfläche 4. Daraufhin werden von der Steuervorrichtung 3 Graphikdaten erzeugt, welche eine animierte Bildfolge darstellen, welche die graphischen Objekte 20-1 bis 20-10 der Reihe 20 so wiedergibt, als ob der Nutzer durch die Wischgeste körperliche Objekte, welche den graphischen Objekten 20-1 bis 20-10 zugeordnet sind, beschleunigt hätte und diese körperlichen Objekte zum Beispiel durch Reibung abgebremst werden würden. Die animierte Bildfolge endet bei einem graphischen Objekt in der Mitte der Anzeigefläche 2, welches nach dem Wechsel in den Anzeigezustand markiert dargestellt wird. Bei welchem graphischen Objekt 20-1 bis 20-10 die animierte Bildfolge in der Mitte der Anzeigefläche 2 endet, hängt von der Strecke ab, bei welcher der Nutzer während der Wischgeste die berührungsempfindliche Oberfläche 4 berührt hat. Des Weiteren hängt dies jedoch auch von der Geschwindigkeit und/oder Beschleunigung ab, mit welcher der Nutzer die Wischgeste auf der berührungsempfindlichen Oberfläche 4 ausgeführt hat. Bei der gleichen Strecke, bei welcher der Nutzer die berührungsempfindliche Oberfläche 4 während der Wischgeste berührt hat, wird ein entfernteres graphisches Objekt 20-1 bis 20-10 am Ende der animierten Bildfolge in der Mitte angezeigt, wenn die Wischgeste schneller ausgeführt wurde.

Des Weiteren werden von der Steuervorrichtung 3 Graphikdaten für drei Schaltflächen 23, 24 und 25 erzeugt, welche im oberen Bereich der Anzeigefläche 2 dargestellt werden. Im Anzeigezustand werden die Schaltflächen 23 bis 25 als reine Anzeigeelemente angezeigt. Im Bedienzustand werden Schaltflächen 23 bis 25 mit einer entsprechenden Umrandung dargestellt, so dass dem Nutzer visualisiert wird, dass diese Schaltflächen 23 bis 25 betätigbar sind.

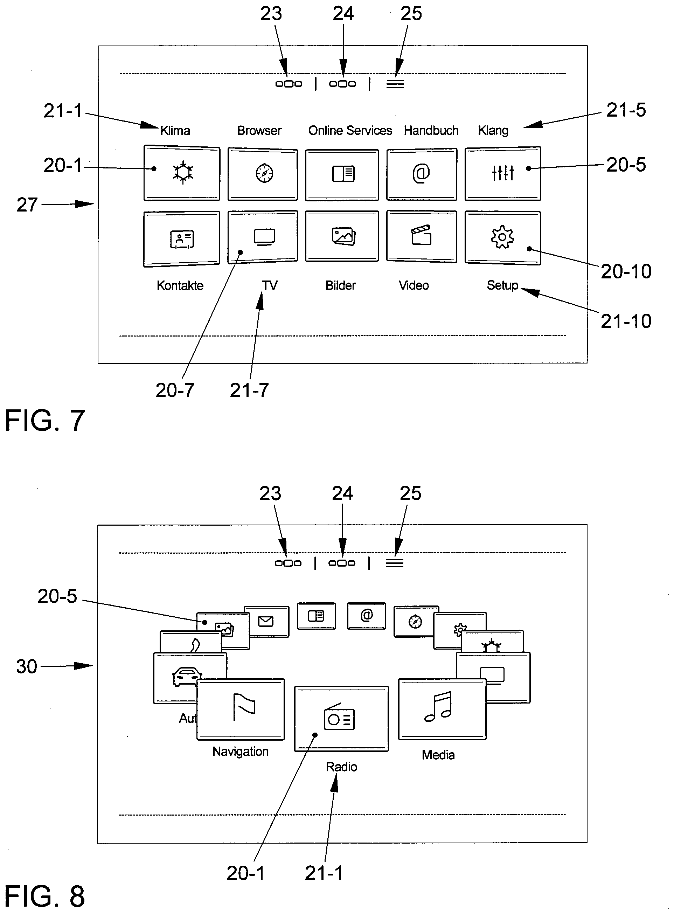

Jeder der Schaltflächen 23 bis 25 ist ein Anzeigemodus zugeordnet. Der Schaltfläche 23 ist der erste Anzeigemodus zugeordnet, welcher mit Bezug zu den Figuren 3 bis 5 erläutert worden ist. Der Schaltfläche 25 ist ein zweiter Anzeigemodus zugeordnet, welcher später mit Bezug zu den Figuren 6 und 7 erläutert wird, und die Schaltfläche 24 ist schließlich einem dritten Anzeigemodus zugeordnet, welcher in Figur 8 gezeigt ist.

Wenn der Nutzer die Schaltfläche 25 betätigt, indem er beispielsweise die berührungsempfindliche Oberfläche 4 in dem Bereich antippt, in dem die Schaltfläche 25 auf der Anzeigefläche 2 dargestellt wird, erzeugt die Steuervorrichtung 3 Graphikdaten für einen Wechsel von dem ersten Anzeigemodus in den zweiten Anzeigemodus. Während des Übergangs von dem ersten Anzeigemodus in den zweiten Anzeigemodus wird von der Steuervorrichtung 3 eine animierte Bildfolge wiedergegeben, bei der die angezeigten graphischen Objekte, zum Beispiel die graphischen Objekte 20-6 bis 20-10 wie in Figur 3 dargestellt, von ihren Positionen bei dem ersten Anzeigemodus zu den Positionen bei dem zweiten Anzeigemodus bewegt werden. Ferner werden vom Rand her graphische Objekte eingeblendet, die in dem ersten Anzeigemodus nicht angezeigt wurden, die im zweiten Anzeigemodus jedoch angezeigt werden.

Mit Bezug zu den Figuren 6 und 7 werden zwei Alternativen für die Darstellung der graphischen Objekte 20-1 bis 20-10 in dem zweiten Anzeigemodus erläutert:
Bei der in Figur 6 dargestellten Alternative werden alle graphischen Objekte 20-1 bis 20-10 in einer Matrix 26 dargestellt. Die graphischen Objekte 20-1 bis 20-10 sind dabei in zwei Zeilen und fünf Spalten angeordnet, wobei unterhalb jedes graphischen Objekts 20-1 bis 20-10 das graphische Zusatzobjekt 21-1 bis 21-10 dargestellt wird. Die Schaltflächen 23 bis 25 für den Wechsel zwischen den Anzeigemodi werden weiterhin wie im ersten Anzeigemodus dargestellt.

Bei der in Figur 7 gezeigten Alternative werden die graphischen Objekte 20-1 bis 20-10 auch in einer Matrix 27 mit zwei Reihen und fünf Spalten angezeigt, wobei die graphischen Zusatzobjekte 21-1 bis 21-10 bei den graphischen Objekten 20-1 bis 20-5 der oberen Zeile oberhalb der graphischen Objekte 20-1 bis 20-5 angezeigt werden und die graphischen Zusatzobjekte 21-6 bis 21-10 der graphischen Objekte 20-6 bis 20-10 der unteren Zeile unterhalb dieser graphischen Objekte 20-6 bis 20-10 angezeigt werden. Auch in diesem Fall werden die Schaltflächen 23 bis 25 für den Wechsel zwischen den Anzeigemodi wie im ersten Anzeigemodus dargestellt.

Bei der Darstellung im zweiten Anzeigemodus kann der Nutzer ein graphisches Objekt 20-1 bis 20-10 dadurch auswählen, dass er die berührungsempfindliche Oberfläche 4 in dem Bereich antippt, in dem das jeweilige graphische Objekt 20-1 bis 20-10 auf der Anzeigefläche 2 angezeigt wird. Nach der Auswahl eines graphischen Objekts 20-1 bis 20-10 wird ein Informationsinhalt angezeigt, welcher dem entsprechenden graphischen Objekt 20-1 bis 20-10 zugeordnet ist, bzw. eine Anwendung ausgeführt, welche dem jeweiligen graphischen Objekt 20-1 bis 20-10 zugeordnet ist.

Betätigt der Nutzer die Schaltfläche 24, wird eine animierte Bildfolge erzeugt, welche im dritten Anzeigemodus endet, wie es in Figur 8 dargestellt ist. In diesem Fall werden die graphischen Objekte 20-1 bis 20-10 auf einem virtuellen, perspektivisch dargestellten Ring 30 angeordnet dargestellt. Die Bewegung und die Auswahl der graphischen Objekte 20-1 bis 20-5 im dritten Anzeigemodus ist im Detail beispielsweise in der WO 2009/024400 A1 beschrieben.

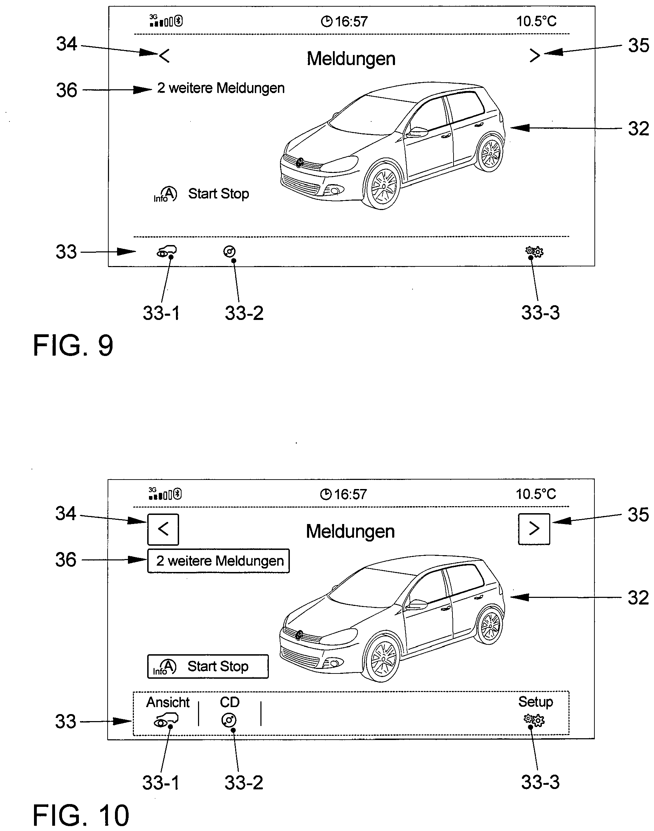

Wenn der Nutzer wie vorstehend beschrieben ein graphisches Objekt 20-1 bis 20-10 auswählt, wird eine diesem graphischen Objekt zugeordnete Anwendung gestartet. Wenn der Nutzer beispielsweise bei der Anzeige im ersten Anzeigemodus gemäß Figur 4 das graphische Objekt 20-5 dadurch auswählt, dass er die berührungsempfindliche Oberfläche 4 in diesem Bereich der Anzeigefläche 2 kurz antippt und danach seine Finger wieder aus dem Detektionsbereich 8 entfernt, wird die in Figur 9 gezeigte Anzeige mittels der Steuervorrichtung 3 auf der Anzeigefläche 2 angezeigt. Als zentrales Element wird ein graphisches Objekt 32 angezeigt, welches ein Fahrzeug darstellt. Des Weiteren werden Pfeilsymbole 34 und 35 angezeigt, über welche verschiedene Meldungen zu dem Fahrzeug abgerufen werden können. Ferner wird ein graphisches Objekt 36 angezeigt, welches auf die Anzahl der vorliegenden Meldungen hinweist.

Im unteren Bereich der Anzeigefläche 2 wird eine Leiste 33 mit weiteren graphischen Objekten 33-1, 33-2 und 33-3 angezeigt. Über das Objekt 33-1 können verschiedene Ansichten ausgewählt werden, über das graphische Objekt 33-2 kann direkt auf eine Audiowiedergabeeinrichtung zugegriffen werden, und über das graphische Objekt 33-3 kann auf ein Menü für Einstellungen zugegriffen werden.

In Figur 9 ist die Anzeige auf der Anzeigefläche 2 im Anzeigezustand gezeigt. Wenn sich der Nutzer nun mit seiner Fingerspitze 38 der berührungsempfindlichen Oberfläche 4 auf der Anzeigefläche 2 nähert und in den Detektionsbereich 8 eintritt, wechselt die Steuervorrichtung 3 die Anzeige auf der Anzeigefläche 2 automatisch in einen Bedienzustand. Die Anordnung der graphischen Objekte auf der Anzeigefläche 2 ändert sich dabei nicht, die graphischen Objekte 34 bis 36 und 33-1 bis 33-3, welche der Nutzer betätigen kann, werden jedoch in Schaltflächen umgewandelt. Es wird, wie in Figur 10 gezeigt, um die graphischen Objekte 34 bis 36 ein Rahmen angezeigt, welcher im Anzeigezustand, der in Figur 9 gezeigt ist, nicht angezeigt wurde. Ferner wird die Leiste 33 grau hinterlegt und vergrößert angezeigt. Durch diese Veränderung kann der Nutzer schnell und intuitiv erkennen, in welchen Bereichen der berührungsempfindlichen Oberfläche Betätigungen und Einstellungen vorgenommen werden können.

### Bezugszeichenliste

- 1: Anzeigevorrichtung
- 2: Anzeigefläche
- 3: Steuervorrichtung
- 4: berührungsempfindliche Oberfläche, Eingabevorrichtung
- 5: Datenbus
- 6: Bedienvorrichtung
- 7: Annäherungserfassungseinrichtung
- 8: Detektionsbereich
- 9: Einrichtung des Fahrzeugs
- 10: Einrichtung des Fahrzeugs
- 20: Reihe
- 20-1 bis 20-10: graphische Objekte
- 21, 21-1 bis 21-10: graphische Zusatzobjekte
- 22: graphisches Navigationsobjekt
- 23: Schaltfläche
- 24: Schaltfläche
- 25: Schaltfläche
- 26: Matrix
- 27: Matrix
- 30: virtuell dargestellter perspektivischer Ring
- 32: graphisches Objekt
- 33: Leiste
- 33-1 bis 33-3: Schaltflächen
- 34: graphisches Objekt, Schaltfläche
- 35: graphisches Objekt, Schaltfläche
- 36: graphisches Objekt, Schaltfläche
- 37: Fahrzeug
- 38: Betätigungsobjekt, Fingerspitze

## Patentansprüche

1. Verfahren zum Bereitstellen einer Bedienvorrichtung (6) fuer ein Fahrzeug (37), bei dem
- von einer Steuervorrichtung (3) Graphikdaten erzeugt werden, die eine Anzeigefläche (2) so ansteuern, dass mehrere graphische Objekte (20-1 bis 20-10) in zumindest zwei Anzeigemodi darstellbar sind, wobei in dem ersten Anzeigemodus die graphischen Objekte (20-1 bis 20-10) in einer einzigen Reihe (20) nebeneinander angeordnet angezeigt werden,
**dadurch gekennzeichnet, dass**
- in dem zweiten Anzeigemodus die graphischen Objekte (20-1 bis 20-10) in einer Matrix (26; 27) angeordnet angezeigt werden,
- zumindest eine Schaltfläche (23 bis 25) für einen Wechsel zwischen den Anzeigemodi angezeigt wird, wobei die Position eines Betätigungsobjekts vor oder auf der Anzeigefläche (2) relativ zu der Schaltfläche (23 bis 25) erfasst wird und in Abhängigkeit von der erfassten Position ein Steuersignal für eine Betätigung der Schaltfläche (23 bis 25) erzeugt wird und durch das Steuersignal ein Wechsel von dem aktuell angezeigten Anzeigemodus in den anderen Anzeigemodus durchgeführt wird, wobei während des Übergangs von dem aktuell angezeigten Anzeigemodus in den anderen Anzeigemodus eine animierte Bildfolge wiedergegeben wird, bei der die graphischen Objekte (20-1 bis 20-10) von den Positionen bei dem aktuell angezeigten Anzeigemodus zu den Positionen bei dem anderen Anzeigemodus bewegt werden.

2. Verfahren nach Anspruch 1,
**dadurch gekennzeichnet, dass**
die graphischen Objekte (20-1 bis 20-10) Informationssymbole umfassen, dass zu jedem graphischen Objekt (20-1 bis 20-10) ein graphisches Zusatzobjekt (21; 21-1 bis 21-10) definiert ist, dessen Graphikdaten von der Steuervorrichtung erzeugbar sind, und dass im ersten Anzeigemodus das graphische Zusatzobjekt (21) nur für ein markiertes Objekt (20-8, 20-5, 20-1) angezeigt wird und im zweiten Anzeigemodus die graphischen Zusatzobjekte (21-1 bis 21-10) aller angezeigten Objekte (20-1 bis 20-10) angezeigt werden.

3. Verfahren nach Anspruch 1 oder 2,
**dadurch gekennzeichnet, dass**
eine Annäherung des Betätigungsobjekts in einen Detektionsbereich (8) vor der Anzeigefläche (2) erfasst wird und die Steuervorrichtung (3) von einem Anzeigezustand in einen Bedienzustand wechselt, wenn ein Betätigungsobjekt im Detektionsbereich (8) erfasst wurde.

4. Verfahren nach Anspruch 3,
**dadurch gekennzeichnet, dass**
im ersten Anzeigemodus ein graphisches Objekt (20-8, 20-5, 20-2) einer bestimmten Position automatisch markiert ist und dass die Markierung im Bedienzustand durch eine hervorgehobene Darstellung des markierten graphischen Objekts (20-8, 20-5, 20-1) visualisiert wird.

5. Verfahren nach einem der vorhergehenden Ansprüche,
**dadurch gekennzeichnet, dass**
im ersten Anzeigemodus eine Teilmenge aller graphischen Objekte (20-1 bis 20-10) angezeigt wird und dass ein graphisches Navigationsobjekt (22) angezeigt wird, das visualisiert, welche Teilmenge aktuell angezeigt wird, und das mehrere Schaltflächen zum Auswählen der Teilmenge umfasst.

6. Verfahren nach einem der vorhergehenden Ansprüche,
**dadurch gekennzeichnet, dass**
im ersten Anzeigemodus eine Teilmenge aller graphischen Objekte (20-1 bis 20-10) angezeigt wird und dass die aktuell angezeigte Teilmenge dadurch verändert wird, dass eine Wischgeste des Betätigungsobjekts erfasst wird.

7. Verfahren nach einem der vorhergehenden Ansprüche,
**dadurch gekennzeichnet, dass**
im zweiten Anzeigemodus alle graphischen Objekte (20-1 bis 20-10) gleichzeitig angezeigt werden.

8. Verfahren nach einem der Ansprüche 4 bis 7,
**dadurch gekennzeichnet, dass**
im ersten Anzeigemodus ein graphisches Objekt (20-1 bis 20-10) dadurch ausgewählt wird, dass das Betätigungsobjekt eine berührungsempfindliche Oberfläche (4) der Anzeigefläche (2) in dem Bereich antippt, in dem das graphische Objekt (20-1 bis 20-10) angezeigt wird, und dass nach der Auswahl das ausgewählte graphische Objekt (20-5) zu der bestimmten Position des markierten graphischen Objekts bewegt wird und schließlich ein dem ausgewählten graphischen Objekt (20-5) zugeordneter Informationsinhalt angezeigt wird oder eine dem ausgewählten graphischen Objekt (20-5) zugeordnete Anwendung ausgeführt wird.

9. Bedienvorrichtung (6) für ein Fahrzeug mit
- einer Anzeigevorrichtung (1) mit einer Anzeigefläche (2),
- einer Steuervorrichtung (3), die mit der Anzeigevorrichtung (1) gekoppelt ist und mittels derer Graphikdaten zum Anzeigen graphischer Objekte (20-1 bis 20-10) erzeugbar sind und mittels derer mehrere graphische Objekte (20-1 bis 20-10) in zumindest zwei Anzeigemodi darstellbar sind, wobei in dem ersten Anzeigemodus die graphischen Objekte (20-1 bis 20-10) in einer einzigen Reihe (20) nebeneinander angeordnet anzeigbar sind, und
- einer Annäherungserfassungseinrichtung (7) zum Erfassen der Position eines Betätigungsobjekts vor oder auf der Anzeigefläche (2),
**dadurch gekennzeichnet, dass**
- mittels der Steuervorrichtung (3) in dem zweiten Anzeigemodus die graphischen Objekte (20-1 bis 20-10) in einer Matrix (26; 27) angeordnet anzeigbar sind,
- zumindest eine Schaltfläche (23 -25) für einen Wechsel zwischen den Anzeigemodi anzeigbar ist, wobei ein Steuersignal für eine Betätigung der Schaltfläche (23 -25) erzeugbar ist, wenn von der Annäherungserfassungseinrichtung (7) eine bestimmte Position des Betätigungsobjekts relativ zu der Schaltfläche (23 - 25) erfasst worden ist, und wobei durch das Steuersignal ein Wechsel von dem aktuell angezeigten Anzeigemodus in den anderen Anzeigemodus durchführbar ist, wobei während des Übergangs von dem aktuell angezeigten Anzeigemodus in den anderen Anzeigemodus eine animierte Bildfolge wiedergegeben wird, bei der die graphischen Objekte (20-1 bis 20-10) von den Positionen bei dem aktuell angezeigten Anzeigemodus zu den Positionen bei dem anderen Anzeigemodus bewegt werden.

10. Fahrzeug mit einer Bedienvorrichtung (6) nach Anspruch 9.

## Claims

1. A method for making available an operator control apparatus (6) in a vehicle (37), in which
- graphic data are generated by a control device (3), which actuates a display surface (2) such that a plurality of graphic objects (20-1 to 20-10) can be displayed in at least two display modes, wherein in the first display mode the graphic objects (20-1 to 20-10) are displayed arranged one next to the other in a single row (20),
**characterized in that**
- in the second display mode the graphic objects (20-1 to 20-10) are displayed arranged in a matrix (26; 27),
- at least one control button (23 to 25) is shown for a change between the display modes, wherein the position of an activation object in front of or on the display surface (2) is detected relative to the control button (23 to 25) and as a function of the detected position a control signal is generated for an activation of the control button (23 to 25) and a change is carried out from the currently displayed display mode into the other display mode by the control signal, wherein during the changeover from the currently displayed display mode into the other display mode an animated image sequence is represented, in which the graphic objects (20-1 to 20-10) are moved from the positions in the currently displayed display mode to the positions in the other display mode.

2. The method according to Claim 1,
**characterized in that**
the graphic objects (20-1 to 20-10) comprise information symbols, that for each graphic object (20-1 to 20-10) a graphic additional object (21, 21-1 to 21-10) is defined, the graphic data of which can be generated by the control device, and that in the first display mode the graphic additional object (21) is only displayed for a marked object (20-8, 20-5, 20-1) and in the second display mode the graphic additional objects (21-1 to 21-10) of all displayed objects (20-1 to 20-10) are displayed.

3. The method according to Claim 1 or 2,
**characterized in that**
an approach of the activation object into a detection region (8) in front of the display surface (2) is detected and the control device (3) changes from a display state into an operating state, if an activation object was detected in the detection region (8).

4. The method according to Claim 3,
**characterized in that**
in the first display mode a graphic object (20-8, 20-5, 20-2) of a specific position is automatically marked and that the marking in the operating state is visualized by a highlighted representation of the marked graphic object (20-8, 20-5, 20-1).

5. The method according to any one of the preceding claims,
**characterized in that**
in the first display mode a subset of all of the graphic objects (20-1 to 20-10) is displayed and that a graphic navigation object (22) is displayed, which visualizes which subset is currently displayed, and which comprises a plurality of control buttons for selecting the subset.

6. The method according to any one of the preceding claims,
**characterized in that**
in the first display mode a subset of all of the graphic objects (20-1 to 20-10) is displayed and that the currently displayed subset is changed **in that** a wiping gesture of the activation object is detected.

7. The method according to any one of the preceding claims,
**characterized in that**
in the second display mode all of the graphic objects (20-1 to 20-10) are displayed simultaneously.

8. The method according to any one of Claims 4 to 7,
**characterized in that**
in the first display mode a graphic object (20-1 to 20-10) is selected **in that** the activation object taps a touch-sensitive surface (4) of the display surface (2) in the region, in which the graphic object (20-1 to 20-10) is displayed, and that after the selection the selected graphic object (20-5) is moved to the specific position of the marked graphic object and subsequently an information content assigned to the selected graphic object (20-5) is displayed or an application assigned to the selected graphic object (20-5) is carried out.

9. An operator control apparatus (6) for a vehicle having
- a display device (1) with a display surface (2),
- a control device (3), which is coupled with the display device (1) and by means of which graphic data can be generated for the display of graphic objects (20-1 to 20-10) and by means of which a plurality of graphic objects (20-1 to 20-10) can be represented in at least two display modes, wherein in the first display mode the graphic objects (20-1 to 20-10) can be displayed arranged one next to the other in a single row (20), and
- an approach detection device (7) for detecting the position of an activation object in front of or on the display surface (2),
**characterized in that**
- by means of the control device (3) in the second display mode the graphic objects (20-1 to 20-10) can be displayed arranged in a matrix (26; 27),
- at least one control button (23-25) for a change between the display modes can be displayed, wherein a control signal for an activation of the control button (23-25) can be generated, if a specific position of the activation object relative to the control button (23-25) has been detected by the approach detection device (7), and wherein a change from the currently displayed display mode into the other display mode can be carried out by the control signal, wherein during the changeover from the currently displayed display mode into the other display mode an animated image sequence is represented, in which the graphic objects (20-1 to 20-10) are moved from the positions in the currently displayed display mode to the positions in the other display mode.

10. The vehicle with an operator control apparatus (6) according to Claim 9.

## Revendications

1. Procédé de fourniture d'un dispositif de commande (6) pour un véhicule (37), dans lequel
- des données graphiques sont produites par un dispositif de contrôle (3) et pilotent une surface d'affichage (2) de telle sorte que plusieurs objets graphiques (20-1 à 20-10) peuvent être représentés dans au moins deux modes d'affichage, dans lequel, dans le premier mode d'affichage, les objets graphiques (20-1 à 20-10) sont affichés en étant disposés de façon juxtaposée dans une seule rangée (20),
**caractérisé en ce que**
- dans le deuxième mode d'affichage, les objets graphiques (20-1 à 20-10) sont affichés en étant disposés dans une matrice (26 ; 27),
- au moins un bouton (23 à 25) est affiché pour un changement entre les modes d'affichage, dans lequel la position d'un objet d'actionnement devant ou sur la surface d'affichage (2) par rapport au bouton (23 à 25) est détectée et, en fonction de la position détectée, un signal de commande pour un actionnement du bouton (23 à 25) est produit et un changement à partir du mode d'affichage affiché actuellement vers l'autre mode d'affichage est effectué par le signal de commande, dans lequel, pendant la transition du mode d'affichage affiché actuellement vers l'autre mode d'affichage, une chaîne binaire animée est reproduite, avec laquelle les objets graphiques (20-1 à 20-10) sont déplacés à partir des positions correspondant au mode d'affichage affiché actuellement vers les positions correspondant à l'autre mode d'affichage.

2. Procédé selon la revendication 1,
**caractérisé en ce que**
les objets graphiques (20-1 à 20-10) comprennent des symboles d'information, **en ce que**, pour chaque objet graphique (20-1 à 20-10), un objet supplémentaire graphique (21 ; 21-1 à 21-10) est défini, dont les données graphiques peuvent être produites par le dispositif de contrôle, et **en ce que**, dans le premier mode d'affichage, l'objet supplémentaire graphique (21) n'est affiché que pour un objet repéré (20-8, 20-5, 20-1) et, dans le deuxième mode d'affichage, les objets supplémentaires graphiques (21-1 à 21-10) de tous les objets graphiques (20-1 à 20-10) affichés sont affichés.

3. Procédé selon la revendication 1 ou 2,
**caractérisé en ce**
**qu'**une approche de l'objet d'actionnement dans une zone de détection (8) devant la surface d'affichage (2) est détectée, et le dispositif de contrôle (3) change d'un état d'affichage vers un état de commande quand un objet d'actionnement a été détecté dans la zone de détection (8).

4. Procédé selon la revendication 3,
**caractérisé en ce que,**
dans le premier mode d'affichage, un objet graphique (20-8, 20-5, 20-2) d'une position définie est repéré automatiquement, et **en ce que**, dans l'état de commande, le repérage est montré par une représentation mise en exergue de l'objet graphique (20-8, 20-5, 20-1) repéré.

5. Procédé selon l'une des revendications précédentes,
**caractérisé en ce que,**
dans le premier mode d'affichage, une quantité partielle de tous les objets graphiques (20-1 à 20-10) est affichée, et **en ce qu'**un objet de navigation (22) graphique est affiché, qui montre quelle quantité partielle est affichée actuellement et qui comprend plusieurs boutons pour la sélection de la quantité partielle.

6. Procédé selon l'une des revendications précédentes,
**caractérisé en ce que,**
dans le premier mode d'affichage, une quantité partielle de tous les objets graphiques (20-1 à 20-10) est affichée, et **en ce que** la quantité partielle affichée actuellement est modifiée par le fait qu'un geste d'effleurement de l'objet d'actionnement est détecté.

7. Procédé selon l'une des revendications précédentes,
**caractérisé en ce que,**
dans le deuxième mode d'affichage, tous les objets graphiques (20-1 à 20-10) sont affichés simultanément.

8. Procédé selon l'une des revendications 4 à 7, **caractérisé en ce que**,
dans le premier mode d'affichage, un objet graphique (20-1 à 20-10) est sélectionné par le fait que l'objet d'actionnement tapote une surface tactile (4) de la surface d'affichage (2) dans la zone dans laquelle l'objet graphique (20-1 à 20-10) est affiché, et **en ce que**, après la sélection, l'objet graphique (20-5) sélectionné est déplacé vers la position définie de l'objet graphique repéré, et enfin un contenu d'information affecté à l'objet graphique (20-5) sélectionné est affiché, ou une utilisation affectée à l'objet graphique (20-5) sélectionné est effectuée.

9. Dispositif de commande (6) pour un véhicule, avec
- un dispositif d'affichage (1) avec une surface d'affichage (2),
- un dispositif de contrôle (3) qui est couplé avec le dispositif d'affichage (1) et au moyen duquel des données graphiques peuvent être produites pour l'affichage d'objets graphiques (20-1 à 20-10) et au moyen duquel plusieurs objets graphiques (20-1 à 20-10) peuvent être représentés dans au moins deux modes d'affichage, dans lequel, dans le premier mode d'affichage, les objets graphiques (20-1 à 20-10) peuvent être affichés en étant disposés de façon juxtaposée dans une seule rangée (20), et
- un équipement de détection d'approche (7) pour la détection de la position d'un objet d'actionnement devant ou sur la surface d'affichage (2),
**caractérisé en ce que**
- au moyen du dispositif de contrôle (3), dans le deuxième mode d'affichage, les objets graphiques (20-1 à 20-10) peuvent être affichés en étant disposés dans une matrice (26 ; 27),
- au moins un bouton (23 à 25) pour un changement entre les modes d'affichage peut être affiché, dans lequel un signal de commande pour un actionnement du bouton (23 à 25) peut être produit quand une position définie de l'objet d'actionnement par rapport au bouton (23 à 25) a été détectée par l'équipement de détection d'approche (7), et dans lequel un changement à partir du mode d'affichage affiché actuellement vers l'autre mode d'affichage peut être effectué par le signal de commande, dans lequel, pendant la transition du mode d'affichage affiché actuellement vers l'autre mode d'affichage, une chaîne binaire animée est reproduite, avec laquelle les objets graphiques (20-1 à 20-10) sont déplacés à partir des positions correspondant au mode d'affichage affiché actuellement vers les positions correspondant à l'autre mode d'affichage.

10. Véhicule avec un dispositif de commande (6) selon la revendication 9.
